# EUROPÄISCHE PATENTANMELDUNG

(11) **EP 2 626 280 A2**
(43) Veröffentlichungstag der Anmeldung: **14.08.2013**
(21) Anmeldenummer: 12166910.5
(22) Anmeldetag: 04.05.2012
(51) Int. Cl.: B62D 21/02, B62D 21/20, B62D 29/00, B62D 33/04, B62D 53/06

(54) **Längsträger eines Innenladerfahrzeuges**

(30) Priorität: 08.02.2012 DE 102012101030
(71) Anmelder: Meierling GmbH & Co. KG, 58093 Hagen (DE)
(72) Erfinder: Becker, Heinrich, 58093 Hagen (DE)
(74) Vertreter: Dörner, Kötter & Kollegen

(57) **Zusammenfassung**

Die Erfindung betrifft einen Innenlader (1) mit zwei parallel zueinander angeordneten Längsträgern (3), an denen Achshalteböcke (40) mit Einzelradschwingen (4) zur Aufnahme von Rädern (42) sowie Tragprofile (5) zur Aufnahme und Fixierung von Transportgut befestigt sind. Wenigstens ein Längsträger (3, 3') ist aus wenigstens einem über die Länge des Längsträgers einstückig gezogenen Aluminiumprofil (3") gebildet.

## Beschreibung

Die Erfindung betrifft einen Innenlader, mit zwei parallel zueinander angeordneten Längsträgern, an denen Achshalteböcke mit Einzelradschwingen zur Aufnahme von Rädern sowie Tragprofile zur Aufnahme und Fixierung von Transportgut befestigt sind.

Innenlader werden vor allem für den Transport großer Glasscheiben oder auch Betonbauteilen, wie Trägern oder Bindern eingesetzt, welche eine Höhe von bis zu 3,60 m aufweisen können. Diese werden auf speziellen A- oder L-förmigen Transportgestellen oder auch entsprechenden Paletten zusammengefasst, welche von Tragprofilen des Innenladers aufgenommen werden können. Darüber hinaus können Innenlader auch zum doppelstöckigen Palettentransport eingesetzt werden.

Der Innenlader ist eine spezielle Form des Sattelaufliegers. Diese Sattelauflieger haben keine durchgehenden Achsen zwischen den Rädern, sondern eine besondere Form der Einzelradaufhängung, die sogenannten Einzelradschwingen. Ein Innenlader weist ein Chassis auf, welches aus zwei Längsträgern gebildet ist, die im vorderen Bereich über Querträger verbunden sind, sodass etwa die Form einer Stimmgabel gebildet ist. Die Längsträger sind dabei regelmäßig als Stahlblechschweißkonstruktionen ausgebildet, mit einem kastenförmigen Querschnitt, in dem zur Verstärkung innen Stützbleche eingeschweißt sind. Die Herstellung dieser Längsträger gestaltet sich äußerst aufwendig. Darüber hinaus weisen diese Längsträger ein erhebliches Gewicht auf, wodurch das zulässige Ladegewicht des Innenladers reduziert ist.

Hier will die Erfindung Abhilfe schaffen. Der Erfindung liegt die Aufgabe zu Grunde, einen Innenlader der vorgenannten Art bereitzustellen, der aufwandminimiert herstellbar ist und bei dem das zulässige Ladegewicht erhöht ist. Gemäß der Erfindung wird diese Aufgabe durch die Merkmale des kennzeichnenden Teils des Patentanspruchs 1 gelöst.

Mit der Erfindung ist ein Innenlader geschaffen, der aufwandminimiert herstellbar ist und der zudem ein geringeres Gewicht aufweist, wodurch das zulässige Ladegewicht erhöht ist. Durch die Ausbildung wenigstens eines Längsträgers, bevorzugt beider Längsträger aus wenigstens einem über die Länge des Längsträgers einstückig gezogenem Aluminiumprofil ist eine erhebliche Gewichtsreduzierung bewirkt. Darüber hinaus entfällt ein Großteil der bisher erforderlichen aufwendigen Schweißarbeiten.

In Ausgestaltung der Erfindung ist der wenigstens eine Längsträger aus mehreren, vorzugsweise aus vier miteinander verbundenen, gleich geformten, einstückig gezogenen Aluminiumprofilen gebildet. Hierdurch sind die Herstellkosten verringert. Darüber hinaus werden erforderliche Lagerkapazitäten minimiert.

In Alternativer Ausgestaltung der Erfindung ist der wenigstens eine Längsträger aus mehreren, vorzugsweise drei oder vier miteinander verbundenen, unterschiedlich geformten, einstückig gezogenen Aluminiumprofilen gebildet. Hierdurch ist eine Reduzierung doppelter Innenwandstärken erzielbar, wodurch das Gewicht des Längsträgers vermindert ist.

Bevorzugt ist wenigstens ein Längeträger aus einem einstückig gezogenen Aluminiumprofil gebildet. Hierdurch sind Gewichtsoptimierungen ermöglicht. Darüber hinaus sind die Herstellaufwendungen reduzierbar.

In Weiterbildung der Erfindung ist der wenigstens eine Längsträger als Kastenprofil ausgebildet, in dem innen Verstrebungen angeordnet sind, die einstückig in dem Längsträger angeformt oder durch Außenwände von miteinander verbundenen einstückig gezogenen Aluminiumprofilen gebildet sind. Durch die Anformung der Verstrebungen in einem einstückig gezogenen Aluminiumprofil oder als Seitenwände von miteinander verbundenen einstückig gezogenen Aluminiumprofilen entfallen diesbezügliche Schweißarbeiten zum nachtäglichen Einbringen von Stützverstrebungen, wie sie im Stand der Technik erforderlich sind.

In Ausgestaltung der Erfindung sind an den wenigstens einen Längsträger Anschlüsse für Achshalteböcke der Einzelradschwingen angeformt. Hierdurch entfallen diesbezügliche bisher erforderliche Anpassarbeiten, wodurch der Herstellungsaufwand weiter minimiert ist.

In weiterer Ausgestaltung der Erfindung umfassen die Anschlüsse für die Achshalteböcke der Einzelradschwingen Nutenaufnahmen für Achshaltebockbleche. Hierdurch ist die Montage der Achshalteböcke vereinfacht. Die Achshaltebockbleche sind einfach in die Nuten einschiebbar und können dort nachfolgend verschweißt werden.

In Weiterbildung der Erfindung sind an dem wenigstens einen Längsträger Einformungen zur Befestigung einer Plane angeordnet. Hierdurch ist eine einfache Befestigung der Plane bevorzugt auf der Außenseite des Längsträgers ermöglicht, wodurch eine hierdurch verursachte Vergrößerung der Fahrzeuggesamtbreite verhindert ist.

In weiterer Ausgestaltung der Erfindung ist in den wenigstens einen Längsträger wenigstens eine Ausnehmung zur Aufnahme eines Bremszylinders vorhanden. Hierdurch entfallen aufwendige Schweißarbeiten zur Erstellung der erforderlichen Aufnahme. Bevorzugt sind die in dem Längsträger angeformten Verstrebungen derart ausgebildet, dass eine kastenartige Innenverstrebung gebildet ist, sodass an der jeweils erforderlichen Stelle ein Ausschnitt zur Aufnahme eines Bremszylinders eingebracht werden kann, ohne dass ein zusätzliches Einschweißen von Stützblechen zur Gewährleistung der Stabilität des Längsträgers erforderlich ist.

In weiterer Ausgestaltung der Erfindung sind an dem wenigstens einen Längsträger Längsnuten eingeformt, in die Seitenwände eines Verstärkungsprofils eingreifen, das den Längsträger in seiner Länge lediglich bereichsweise überdeckt. Hierdurch ist eine geringere Dimensionierung des Tragprofils ermöglicht, wodurch eine weitere Material- und Gewichtsersparnis bewirkt ist. In dem vorderen Bereich des Chassis, wo aufgrund der dort angreifenden Kräfte und Momente eine größere Dimensionierung der Längsträger erforderlich ist, erfolgt diese durch Anbringung des Verstärkungsprofils, das genau auf die erforderliche Länge angepasst werden kann. Das Verstärkungsprofil kann mit seinen Seitenwänden einfach in die Längsnuten des Längsträgers eingebracht und mit diesem verschweißt werden.

In Weiterbildung der Erfindung ist das Verstärkungsprofil aus einem einstückig gezogenen Aluminiumprofil gebildet. Hierdurch ist eine einfache Herstellung eines gewichtsoptimierten Verstärkungsprofils ermöglicht. Bevorzugt ist das Verstärkungsprofil in Art eines U-Profils ausgebildet, auf dessen Innenseite Verstrebungen angeformt sind. Diese Verstrebungen können gleichermaßen bei der einstückigen Herstellung des Verstärkungsprofil mit ausgebildet werden, sodass zusätzliche Schweißarbeiten bei der Herstellung des Verstärkungsprofils nicht erforderlich sind.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

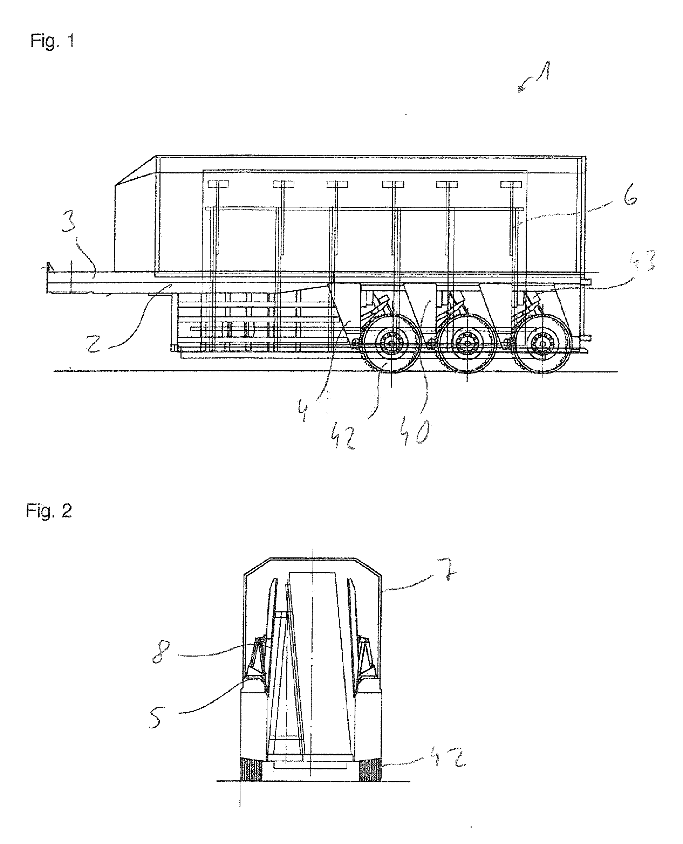

- Fig. 1: die schematische Darstellung eines Innenladers;
- Fig. 2: die schematische Darstellung des Innenladers aus Figur 1 in der Ansicht von hinten;

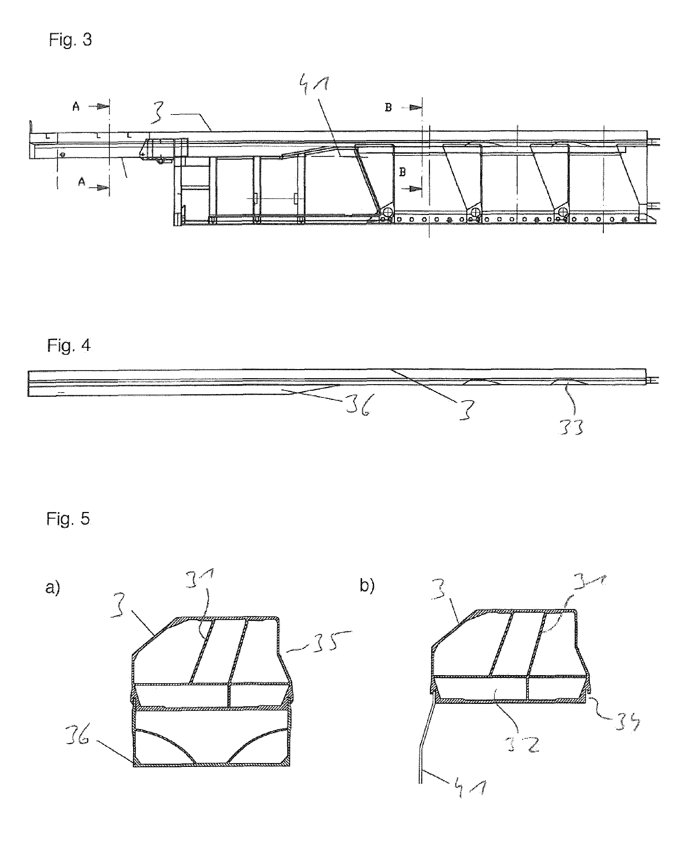

- Fig. 3: die schematische Darstellung des Chassis des Innenladers aus Figur 1;
- Fig. 4: die Darstellung eines Längsträgers des Chassis gemäß Figur 3;
- Fig. 5: die Darstellung des Querschnitts des Längsträgers des Chassis aus Figur 3
a) im Schnitt A-A
b) im Schnitt B-B;
- Fig. 6: die Schnittdarstellung gemäß Figur 5 eines Längsträgers in einer weiteren Ausführungsform mit alternativem Querschnitt;
- Fig. 7: die Darstellung eines Längsträgers in einer dritten Ausführungsform mit konstantem Querschnitt;
- Fig. 8: die Darstellung des Längsträgers aus Figur 7
a) im Querschnitt mit angedeuteten Achsbockblech
b) mit alternativem Querschnitt und angedeutetem Achsbockblech.
- Fig. 9: die Darstellung eines Längsträgers in einer vierten Ausführungsform, gebildet aus zwei gleichgeformten gezogenen Profilen
a) im Querschnitt
b) in Einzelprofildarstellung;
- Fig. 10: die Darstellung eines Längsträgers in einer fünften Ausführungsform, gebildet aus zwei gleichgeformten gezogenen Profilen
a) im Querschnitt
b) in Einzelprofildarstellung;
- Fig. 11: die Darstellung eines Längsträgers in einer sechsten Ausführungsform, gebildet aus zwei unterschiedlich geformten gezogenen Profilen
a) im Querschnitt
b) in Einzelprofildarstellung;
- Fig. 12: die Darstellung eines Längsträgers in einer siebten Ausführungsform, gebildet aus drei unterschiedlich geformten gezogenen Profilen
a) im Querschnitt
b) in Einzelprofildarstellung;
- Fig. 13: die Darstellung eines Längsträgers in einer achten Ausführungsform, gebildet aus vier gleichgeformten gezogenen Profilen
a) im Querschnitt
b) in Einzelprofildarstellung;
- Fig. 14: die Darstellung eines Längsträgers in einer neunten Ausführungsform, gebildet aus vier unterschiedlich geformten gezogenen Profilen
a) im Querschnitt
b) in Einzelprofildarstellung;

Der als Ausführungsbeispiel gewählte Innenlader 1 umfasst im Wesentlichen ein Chassis 2, welches zwei parallel zueinander angeordnete Längsträger 3 umfasst, an denen jeweils drei Achshalteböcke 40 zur Aufnahme jeweils einer Einzelradschwinge 4 angebracht sind. Die Achshalteböcke 40 weisen Achshaltebockbleche 41 auf, die mit dem jeweiligen Längsträger 3 verschweißt sind und die Einzelradschwinge 4 aufnehmen. Innen sind an dem Chassis gegenüberliegend zwei Tragprofile 5 zur Aufnahme und Fixierung von mit Glasscheiben bestückten Transportgestellen 8 angeordnet. Weiterhin ist an dem Chassis 2 ein Gerüst 6 zur Befestigung einer Plane 7 angebracht. Der Innenlader wird heckseitig über eine - nicht dargestellte - Tür verschlossen, welche wesentlich für die Steifigkeit des Chassis ist.

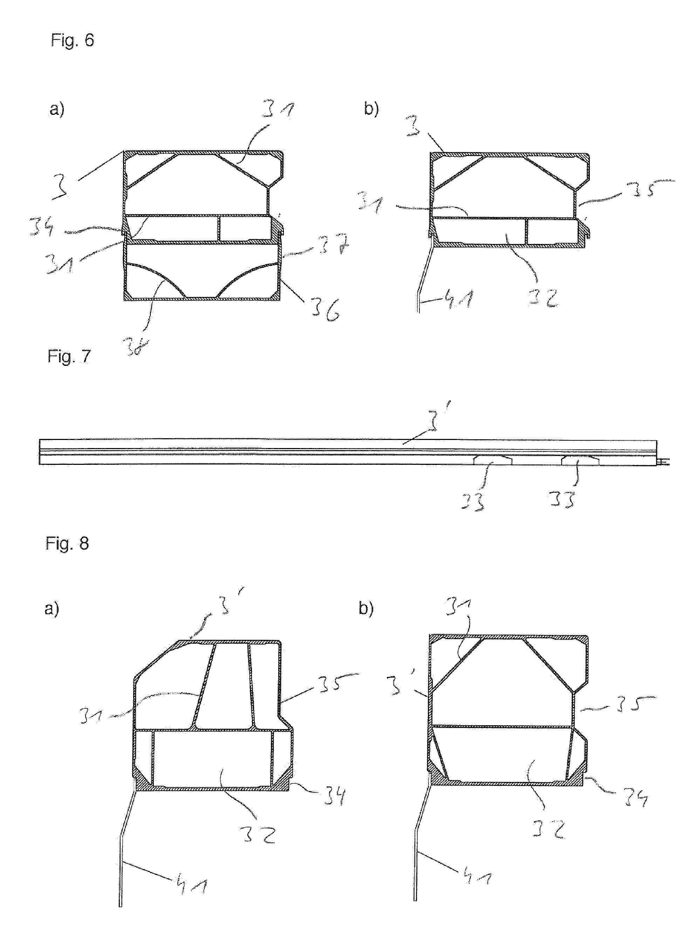

Die Längsträger 3 sind im Ausführungsbeispiel jeweils aus einem einstückig gezogenen Aluminiumprofil gebildet. Innerhalb der kastenförmig ausgebildeten Längsträger 3 sind Streben 31 angeformt, welche der Stabilität der Längsträger 3 dienen. Dabei sind die Streben 31 an der dem Boden zugewandten Seite der Längsträger 3 derart angeformt, dass ein Kasten 32 gebildet ist. In den Kasten 32 sind bedarfsmäßig Ausschnitte 33 zur Aufnahme von Bremszylindern 43 der Einzelradschwinge 4 einbringbar, ohne dass die Stabilität des Längsträgers 3 beeinträchtigt wird. Beidseitig des Kastens 32 sind außen an den Längsträgern 3 Nuten 34 zur Aufnahme von Achsbockblechen 41 der Einzelradschwingen 4 angeordnet. Die Nuten 34 sind jeweils über die gesamte Länge der Längsträger 3 durchgehend ausgebildet und dienen gleichzeitig auch im vorderen Bereich der Aufnahme der Seitenwände 37 eines Verstärkungsprofils 36, das mit dem jeweiligen Längsträger 3 verschweißt ist. Seitlich ist in den Längsträgern 3 eine über die gesamte Länge des jeweiligen Längsträgers 3 verlaufende Einformung 35 angeordnet. Die Einformung 35 dient der flächenbündigen Aufnahme der Plane 7. Der Querschnitt des Längsträgers 3 ist in Figur 6 dargestellt. Dabei zeigt die Figur 6 a) den Querschnitt des Längsträgers 3 im vorderen Bereich, wo zur Aufnahme der dort wirkenden großen Kräfte und Momente zusätzlich ein Verstärkungsprofil 36 angeordnet ist. Figur 6 b) zeigt den Querschnitt des Längsträgers 3 im hinteren Bereich, wo ein solches Verstärkungsprofil 36 nicht erforderlich ist.

In Figur 7 ist eine alternative Ausbildung eines Längsträgers mit über seine gesamte Länge konstanten Querschnitt gezeigt. Der Vorteil dieses Längsträgers 3' ist, dass keine weitere Montage eines Verstärkungsprofils erforderlich ist. Nachteilig ist jedoch das damit einhergehende erhöhte Gewicht des Längsträgers 3'. Figur 8 zeigt verschiedene Ausführungen des Querschnitts eines solchen Längsträgers 3'.

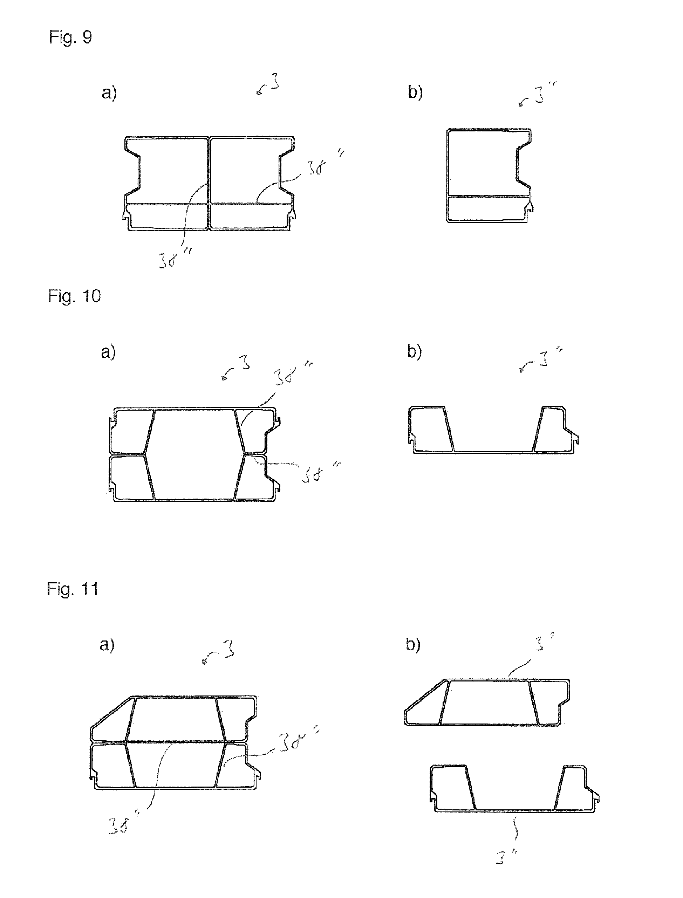

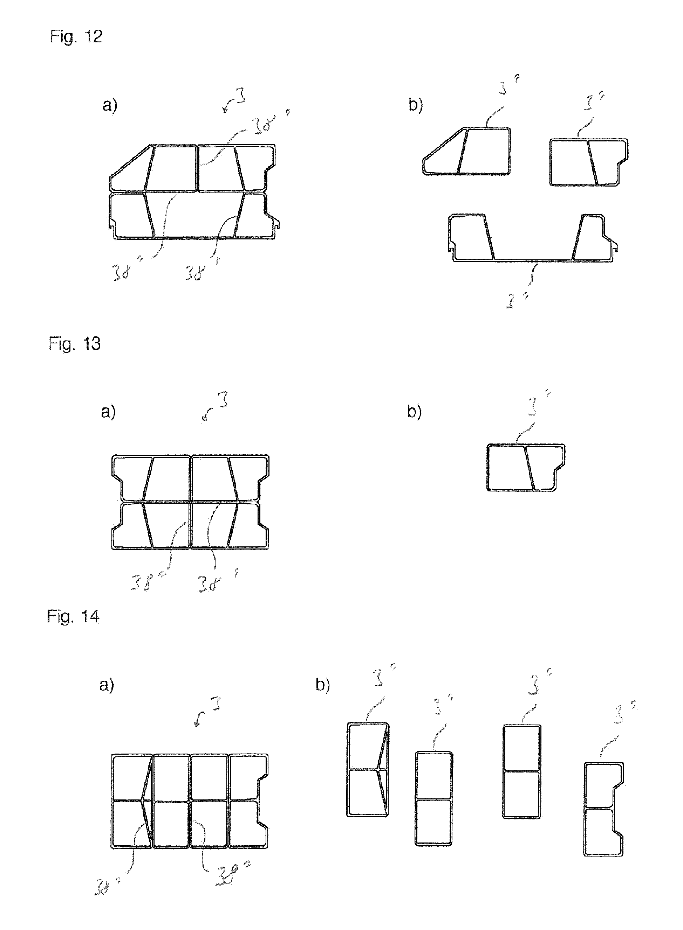

In den Figuren 9 bis 14 sind weitere Ausbildungen eines Längsträgers gezeigt, die aus mehreren über die gesamte Länge des Längsträgers gezogenen, miteinander verbundenen Aluminiumprofilen gebildet sind. In den Ausführungsbeispielen gemäß Figuren 9 und 10 ist der Längsträger 3 jeweils aus zwei miteinander verbundenen gezogenen gleichgeformten Aluminiumprofilen 3" gebildet. Dabei sind die horizontalen Streben 38" (Figur 9) bzw. vertikalen Streben 38" (Figur 10) jeweils doppelwandig ausgeführt. Der Längsträger 3 gemäß Figur 13 ist aus vier miteinander verbundenen gezogenen gleichgeformten Aluminiumprofilen 3" gebildet, wobei Längs- und Querstreben 38" doppelwandig ausgeführt sind.

In den Ausführungsbeispielen gemäß Figuren 11 und 12 ist der Längsträger 3 aus zwei bzw. drei miteinander verbundenen, unterschiedlich geformten, gezogenen Aluminiumprofilen 3" gebildet. Bei diesen gewichtsoptimierten Ausgestaltungen sind - insbesondere bei der Ausführung gemäß Figur 11 - nur geringe Kontaktbereiche vorhanden, wodurch nahezu alle Streben 38" einwandig ausgeführt sind.

Im Ausführungsbeispiel gemäß Figur 14 ist der Längsträger 3 aus vier miteinander verbundenen, unterschiedlich geformten, gezogenen Aluminiumprofilen 3" gebildet.

## Patentansprüche

1. Innenlader (1), mit zwei parallel zueinander angeordneten Längsträgern (3), an denen Achshalteböcke (40) mit Einzelradschwingen (4) zur Aufnahme von Rädern (42) sowie Tragprofile (5) zur Aufnahme und Fixierung von Transportgut befestigt sind, **dadurch gekennzeichnet, dass** wenigstens ein Längsträger (3, 3') aus wenigstens einem über die Länge des Längsträgers einstückig gezogenen Aluminiumprofil (3") gebildet ist.

2. Innenlader nach Anspruch 1, **dadurch gekennzeichnet, dass** wenigstens ein Längsträger (3) aus mehreren, vorzugsweise aus vier miteinander verbundenen, gleich geformten einstückig gezogenen Aluminiumprofilen (3") gebildet ist.

3. Innenlader nach Anspruch 1 oder 2, **dadurch gekennzeichnet, dass** wenigstens ein Längsträger (3, 3') aus mehreren, vorzugsweise drei oder vier miteinander verbundenen, unterschiedlich geformten, einstückig gezogenen Aluminiumprofilen (3") gebildet ist.

4. Innenlader (1) nach Anspruch 1, **dadurch gekennzeichnet, dass** wenigstens ein Längsträger (3, 3') aus einem einstückig gezogenen Aluminiumprofil (3") gebildet ist.

5. Innenlader nach einem der vorgenannten Ansprüche, **dadurch gekennzeichnet, dass** der wenigstens eine Längsträger (3, 3') als Kastenprofil ausgebildet ist, in dem innen Verstrebungen (31) angeordnet sind, die einstückig in dem Längsträger (3, 3') angeformt oder durch Außenwände von miteinander verbundenen einstückig gezogenen Aluminiumprofilen gebildet sind.

6. Innenlader nach einem der vorgenannten Ansprüche, **dadurch gekennzeichnet, dass** an dem wenigstens einen Längsträger (3, 3') Anschlüsse für Achshalteböcke (40) angeformt sind.

7. Innenlader nach Anspruch 6, **dadurch gekennzeichnet, dass** die Anschlüsse für die Achshalteböcke (40) Nuten (34) zur Aufnahme von Achshaltebockblechen (41) umfassen.

8. Innenlader nach einem der vorgenannten Ansprüche, **dadurch gekennzeichnet, dass** an dem wenigstens einen Längsträger (3, 3') Einformungen (35) zur Befestigung einer Plane (7) angeordnet sind.

9. Innenlader nach einem der vorgenannten Ansprüche, **dadurch gekennzeichnet, dass** an dem wenigstens einen Längsträger Einformungen zur flächigen Befestigung von Seitenblechen angeordnet sind.

10. Innenlader nach einem der vorgenannten Ansprüche, **dadurch gekennzeichnet, dass** in dem wenigstens einen Längsträger (3, 3') wenigstens eine Ausnehmung (33) zur Aufnahme eines Bremszylinders (43) vorhanden ist.

11. Innenlader nach einem der vorgenannten Ansprüche, **dadurch gekennzeichnet, dass** an dem wenigstens einen Längsträger (3) Längsnuten (34) eingeformt sind, in die Seitenwände (37) eines Verstärkungsprofils (36) eingreifen, das den Längsträger (3) in seiner Länge lediglich bereichsweise überdeckt.

12. Innenlader nach Anspruch 11, **dadurch gekennzeichnet, dass** das Verstärkungsprofil (36) aus einem einstückig gezogenen Aluminiumprofil gebildet ist.

13. Innenlader nach Anspruch 12, **dadurch gekennzeichnet, dass** das Verstärkungsprofil (36) in Art eines U-Profils ausgebildet ist, auf dessen Innenseite Verstrebungen (38) angeformt sind.
